# EUROPÄISCHE PATENTSCHRIFT

(11) **EP 0 582 115 B1**
(45) Veröffentlichungstag und Bekanntmachung des Hinweises auf die Patenterteilung: **06.12.1995**
(21) Anmeldenummer: 93111461.5
(22) Anmeldetag: 16.07.1993
(51) Int. Cl.: F02K 1/08

(54) **Schubdüse**
Propulsive nozzle
Tuyère propulsive

(30) Priorität: 03.08.1992 DE 4225603
(43) Veröffentlichungstag der Anmeldung: 09.02.1994
(73) Patentinhaber: Daimler-Benz Aerospace Aktiengesellschaft, 81663 München (DE)
(72) Erfinder: Kretschmer, Joachim, Dipl.-Ing., D-82340 Feldafing (DE); Maiss, Thomas, Dipl.-Ing., D-82008 Unterhaching (DE)

(56) Entgegenhaltungen:
- DE-A- 4 012 212
- DE-B- 1 228 107
- GB-A- 758 675
- GB-A- 1 117 738
- US-A- 2 811 827

## Beschreibung

Die Erfindung bezieht sich auf eine Schubdüse für ein Strahl-, und insbesondere ein Hyperschall-Kombinationstriebwerk, nach dem Oberbegriff des Patentanspruchs 1.

Bei Schubdüsen dieser Art ist es bekannt (DE 40 12 212 A1), für die dem Heißgasstrom ausgesetzten Wandabschnitte des Zentralkörpers und des Tragrohres ein aus Kühlkanälen in diesen Wandabschnitten bestehendes Kühlsystem vorzusehen, welches als Kühlmittel mit kryogenem Brennstoff, insbesondere Wasserstoff betrieben wird. Dabei ergeben sich jedoch vor allem hinsichtlich des Explosionsschutzes und der heißgassicheren Abdichtung des Zentralkörper- und Tragrohr-Innenraums konstruktive Schwierigkeiten, die bei den bekannten Schubdüsen dieser Bauart nicht berücksichtigt sind.

Aufgabe der Erfindung ist es, eine Schubdüse der eingangs genannten Art so auszubilden, daß auf konstruktiv einfache Weise eine wirksam heißgasgeschützte Innenraumabdichtung und eine explosionssichere Brennstoffkühlung des Zentralkörpers und Tragrohrs zu erzielen sind.

Diese Aufgabe wird erfindungsgemäß durch die im Patentanspruch 1 gekennzeichnete Schubdüse gelöst.

Erfindungsgemäß wird aufgrund der besonderen Kühlmittelführung und -drucksteuerung und vor allem der kombinierten Anordnung von hydraulischem Stellmotor und Kühlmittel-Sammelkammer am hinteren Tragrohrende eine baulich sehr einfache, tragrohrseitig durch die Hydraulikabdichtung des Stellmotors hochgradig kühlmitteldicht ausgebildete Kühlmittelverbindung zwischen dem triebwerksfesten Tragrohr und dem beweglichen Zentralkörper erzielt, ohne hierfür flexible Kühlmittelleitungen mit wesentlich höherem Bauaufwand und Ausfallrisiko zu benötigen, und zugleich wird ein Eindringen von Heißgas in den Zentralkörper- und Tragrohrinnenraum und das Kühlmittelsystem dadurch mit Sicherheit verhindert, daß der Schiebesitz zwischen Tragrohr und Zentralkörper mit dem druckhöheren Kühlmittel aus der Sammelkammer bedrückt und die entstehende Kühlmittelleckage gefahrlos dem Heißgasstrom im schubdüsenbegrenzten Strömungskanal zugemischt wird. Die erfindungsgemäße Schubdüsenkonstruktion ermöglicht mit geringem Bau- und Gewichtsaufwand eine sicherheitstechnisch problemlose Brennstoffkühlung der den Heißgasströmungskanal begrenzenden Zentralkörper- und Tragrohrwände.

Gemäß einem weiteren vorteilhaften Aspekt der Erfindung kann die Kühlung der Zentralkörper-Außenwand sowohl, wie gemäß Anspruch 2 bevorzugt, im Gleichstrom als auch wahlweise nach Anspruch 3 im Gegenstrom zum Heißgas im Heißgaskanal erfolgen.

In weiterer zweckmäßiger Ausgestaltung wird das Kühlmittel gemäß Anspruch 4 nach Passieren der Zentralkörper-Außenwand am vorderen, brennkammerseitigen Ende des Zentralkörpers über in den Heißgaskanal mündende Auslaßöffnungen ausgeblasen, so daß der Bauaufwand für eine Kühlmittelrückführung entfällt und dennoch die Verbrennungswärme des Kühlbrennstoffs für die Schuberzeugung ausgenutzt wird.

Wahlweise läßt sich jedoch auch eine regenerative Kühlung für den Zentralkörper und das Tragrohr verwenden, die gemäß Anspruch 5 in besonders bevorzugter Weise derart ausgebildet ist, daß der Stellmotor noch weitgehender in das Kühlmittelsystem einbezogen und dadurch der konstruktive Aufwand für die Kühlmittelrückführung ganz erheblich vereinfacht wird. Dabei wird die zum Zwecke der Kühlmittelrückführung benutzte Kolbenstange des Stellmotors nach Anspruch 6 zweckmäßigerweise thermisch isoliert, um auf diese Weise einer übermässigen Wärmebelastung des Hydraulikmittels im Stellmotor entgegenzuwirken.

Um dem Zentralkörper mit geringem Bau- und Gewichtsaufwand eine unter Berücksichtigung des relativ hohen Heißgasdrucks im Heißgaskanal ausreichende Formstabilität zu verleihen, empfiehlt es sich, den Zentralkörper-Innenraum gemäß Anspruch 7 mit Druckmittel, und zwar nach Anspruch 8 vorzugsweise mit Kühlmittel aus der Kühlmittel-Sammelkammer, zu befüllen und/oder nach Anspruch 9 durch einen Leichtstoffkern zu versteifen.

Im Hinblick auf eine weitere Verbesserung des Explosionsschutzes wird das Kühlsystem schließlich gemäß Anspruch 10 bei abgeschaltetem Triebwerk mit einem Inertgas durchspült, wobei die Wirksamkeit dieser Maßnahme dadurch erheblich unterstützt wird, daß die sich erfindungsgemäß ergebende Tragrohr- und Zentralkörperkühlung weitgehend frei von Kühlmittel-Totwasserzonen ist.

Die Erfindung wird nunmehr anhand eines Ausführungsbeispieles in Verbindung mit den Zeichnungen näher erläutert. Es zeigen in stark schematisierter Darstellung:
- **Fig. 1**: einen Längsschnitt einer Schubdüse nach der Erfindung, mit (untere Hälfte der Fig. 1) und ohne (obere Hälfte der Fig. 1) regenerativer Kühlung von Tragrohr und Zentralkörper; und
- **Fig. 2**: einen Teilausschnitt der in der unteren Hälfte der Fig. 1 dargestellten Ausführungsform im Bereich des vorderen Zentralkörperendes.

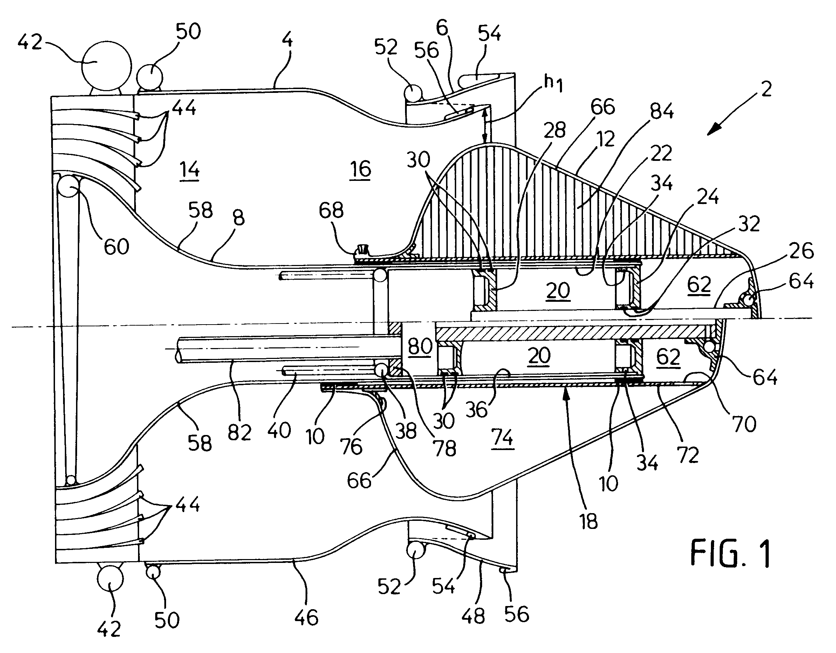

Gemäß Fig. 1 enthält die Schubdüse 2 als Hauptbestandteile eine triebwerksfeste, konvergent-divergente Schubdüsen-Außenwand 4, ein axial verfahrbares, glockenförmiges Schubdüsen-Verlängerungsteil 6, ein zentrales Tragrohr 8 und einen pilzförmigen, auf dem Tragrohr 8 im Schiebesitz über Gleitlager 10 axialbeweglich geführten Zentralkörper 12, die gemeinsam einen von der Brennkammer 14 zum Düsen-Austrittsende verlaufenden Heißgas-Störmungskanal 16 begrenzen, dessen Querschnittskonfiguration einerseits durch eine Axialverstellung des Zentralkörpers 12 auf dem Tragrohr 8 und andererseits dadurch veränderbar ist, daß das Verlängerungsteil 6 zur austrittsseitigen Erweiterung des Heißgaskanals 16 aus der gezeigten vorderen Endstellung axial in die formgleich an das Austrittsende der Düsenaußenwand 4 anschließende Ausfahrposition verstellt wird.

Die Axialeinstellung des Zentralkörpers 12, durch die der engste Störmungsquerschnitt h des Heißgaskanals 16 festgelegt wird, entgegen dem Brennerkammer- bzw. Heißgaskanaldruck wird durch einen hydraulischen Stellmotor 18 bewirkt, der am hinteren Ende des Tragrohrs 8 angeordnet ist und dessen Arbeitskammer 20 durch den zylindrischen Endabschnitt 22 des Tragrohrs 8 zwischen einem am Tragrohr 8 befestigten Deckelteil 24 und einem mit dem hinteren Ende des Zentralkörpers 12 über eine Kolbenstange 26 verbundenen Arbeitskolben 28 gebildet wird. Zur hydraulischen Abdichtung der Arbeitskammer 20 sind zwischen Deckelteil 24 und Kolbenstange 26 bzw. zwischen Arbeitskolben 28 und Tragrohrwand 22 wirksame Hydraulikdichtungen 30 bzw. 32 vorgesehen, und zur Steuerung der Kolbenposition ist die Arbeitskammer 20 über Hydrauliköffnungen 34 im Deckelteil 24 und Hydraulikkanäle 36 in der Zylinderwand 22 des Tragrohrs 8 unter Zwischenschaltung eines Verteilerrings 38 mit einer oder mehreren hydraulischen Zu- und Anfuhrleitungen 40 verbunden.

Zur Brennstoffzufuhr zur Brennkammer 14 ist eine an einen Verteilerring 42 angeschlossene Einspritzvorrichtung 44 vorgesehen, über die der Brennstoff, vorzugsweise kyrogen gespeicherter Wasserstoff, in die Brennkammer 14 eingespritzt und dort verbrannt wird. Die dem Heißgasstrom ausgesetzten Schubdüsenwände werden gleichfalls mit Brennstoff gekühlt. Zu diesem Zweck sind in der Schubdüsenaußenwand 4 und dem Verlängerungsteil 6 brennstoffdurchströmte Kühlmittelkanäle 46 und 48 ausgebildet, die jeweils eintrittsseitig an einen Kühlmittelverteilerring 50 bzw. 52 und austrittsseitig an einen Kühlmittel-Sammelring 54 bzw. 56 angeschlossen sind. In der Tragrohrwand sind gleichfalls brennstoffdurchströmte Kühlmittelkanäle 58 ausgebildet, die von einem Brennstoff-Verteilerring 60 vorbei am Stellmotor 18 zum hinteren Tragrohrende verlaufen und dort in eine vom hinteren Zentralkörperende begrenzte, durch den Deckelteil 24 und die Hydraulikdichtungen 32 des Stellmotors 18 verschlossene, volumenveränderliche Sammelkammer 62 münden. Von dort gelangt der Kühlbrennstoff gemäß der ersten, in der oberen Hälfte der Fig. 1 gezeigten Ausführungsform über einen Zwischenring 64 zu Kühlmittelkanälen 66 in der Zentralkörper-Außenwand und fließt im Gegenstrom zu den Heißgasen im Strömungskanal 16 zum vorderen Zentralkörperende, wo er über düsenförmige Austrittsöffnungen 68 in den Heißgaskanal 16 ausgeblasen wird. Das Druckniveau in der Sammelkammer 62 liegt unterhalb des Hydraulikdrucks in der Arbeitskammer 20 und oberhalb des Heißgasdrucks im Heißgaskanal 16 und beträgt bei Verwendung von Wasserstoff als Kühlmittel etwa 15 bar. Der durch die Gleitlager 10 gebildete Schiebesitz zwischen Zentralkörper 12 und Tragrohr 8 steht ebenfalls mit der Sammelkammer 62 in Verbindung und ein Eindringen von Heißgas wird daher durch die Bedrückung mit dem druckhöheren Kühlmittel aus der Sammelkammer 62 wirksam verhindert, wobei die entstehende Kühlmittelleckage dem Heißgasstrom am heißgasseitigen Schiebesitzende zugemischt wird.

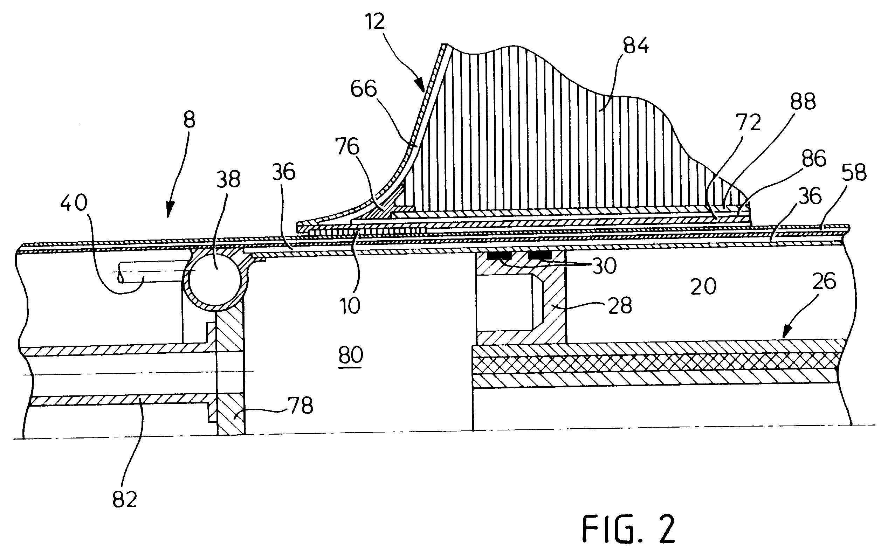

Das in der unteren Hälfte der Fig. 1 und im einzelnen in Fig. 2 dargestellte Ausführungsbeispiel entspricht hinsichtlich der Anordnung des Stellmotors 18, der Kühlmittelzuführung zur Sammelkammer 62 und der Kühlmittelbedruckung des Schiebesitzes zwischen Zentralkörper 12 und Tragrohr 8 dem ersten Ausführungsbeispiel und unterscheidet sich von diesem hauptsächlich durch eine andersartige, nämlich regenerative Kühlmittelführung. In diesem Fall wird der Kühlbrennstoff aus der Sammelkammer 62 über Auslaßöffnungen 70 in der zylindrischen Innenwand 72 des Zentralkörpers 12 nach Passieren des Zentralkörper - Innenraums 74 über ein Verteilerstück 76 den die Zentralkörper-Außenwand durchsetzenden Kühlmittelkanälen 66 am vorderen Zentralkörperende zugeführt und durchströmt die Zentralkörper-Außenwand im Gleichstrom zu den Heißgasen im Heißgaskanal 16 in Richtung des hinteren Zentralkörperendes, von wo er über den Zwischenring 64 und die in diesem Fall zum Schutz vor einer thermischen Überlastung des Hydraulikmittels in der Arbeitskammer 20 wärmeisolierte Kolbenstange 26 in eine im Tragrohr 8 einerseits durch eine tragrohrfeste Zwischenwand 78 und andererseits durch den Arbeitskolben 28 und dessen Hydraulikabdichtung 30 abgeschlossene Rückführkammer 80 gelangt, aus der er zur Weiterverwertung über eine Rückführleitung 82 abgezogen wird.

Aus Formstabilitätsgründen ist der Zentralkörper-Innenraum 74 entweder gemäß der unteren Hälfte der Fig. 1 mit Kühlbrennstoff unter Druck oder einem anderen Druckmedium ausgefüllt und/oder durch einen Leichtstoffkern 84 (obere Hälfte der Fig. 1 und Fig. 2) ausgesteift, wobei im Falle der Regenerativkühlung der Kühlbrennstoff aus der Sammelkammer 62 dem Verteilerstück 76 über einen Ringraum 86 zwischen der Innenwand 72 und einer zu dieser konzentrischen Zwischenwand 88 des Zentralkörpers 12 zugeführt wird (Fig. 2).

Typischerweise befindet sich der Kühlwasserstoff beim Eintritt in den Verteilerring 60 im überkritischen Zustand auf einer Temperatur von etwa 250°K, während die Wasserstoffaustrittstemperatur an den Auslaßöffnungen 68 bzw. in der Rückführkammer 80 bei etwa 600°K liegt.

Anstelle von kyrogen gespeichertem Wasserstoff kann als Kühlmittel natürlich auch ein anderer Brennstoff oder z.B. bei abgeschaltetem Triebwerk oder zum Ausspülen der Brennstoffüllung des Kühlmittelsystems ein inertes Druckmedium, etwa Helium, verwendet werden.

## Patentansprüche

1. Schubdüse für ein Strahl-, insbesondere ein Hyperschall-Kombinationstriebwerk, mit einem pilzförmig ausgebildeten Zentralkörper (12), der zur Querschnittsänderung des schubdüsenbegrenzten Heißgas-Strömungskanals (16) auf einem triebwerksfesten, endseitig vom Zentralkörper (12) umschlossenen Tragrohr (8) mittels eines in diesem untergebrachten, hydraulischen Stellmotors (18) axial verstellbar angeordnet ist, sowie mit einem Kühlsystem mit insbesondere brennstoffdurchströmten Kühlkanälen (58,66) für die der Heißgasströmung ausgesetzten Außenwandabschnitte des Zentralkörpers (12) und Tragohrs (8),
**dadurch gekennzeichnet, daß**
das Kühlsystem eine volumenveränderlich zwischen hinterem Zentralkörperende und Tragrohrende an den Stellmotor (18) angrenzend angeordnete, tragrohrseitig durch die Hydraulikabdichtung (32) des Stellmotors abgeschlossene Kühlmittel-Sammelkammer (62) enthält, die im Zuge des Kühlmittelstroms zwischen den Kühlkanälen (58) der Tragrohr-Außenwand und den Kühlkanälen (66) der Zentralkörper-Außenwand angeordnet ist, und daß das Kühlmittel-Druckniveau in der Sammelkammer unterhalb des Hydraulikdrucks im Stellmotor und oberhalb des Heißgasdrucks am heißgaskanalseitigen Ende der Schiebeverbindung (10) zwischen Zentralkörper (12) und Tragrohr (8) liegt und die Schiebeverbindung mit Kühlmittel aus der Sammelkammer bedrückt ist.

2. Schubdüse nach Anspruch 1,
**dadurch gekennzeichnet, daß**
die Zentralkörper-Außenwand vom Kühlmittel im Gleichstrom zum Heißgas im Heißgaskanal (16) durchströmt ist.

3. Schubdüse nach Anspruch 1,
**dadurch gekennzeichnet, daß**
die Zentralkörper-Außenwand vom Kühlmittel im Gegenstrom zum Heißgas im Heißgaskanal (16) durchströmt ist.

4. Schubdüse nach einem der vorhergehenden Ansprüche,
**gekennzeichnet durch**
Ausblasen des Kühlmittels nach Passieren der Zentralkörper-Außenwand über in die Heißgasströmung mündende Austrittsöffnungen (68).

5. Schubdüse nach einem der Ansprüche 1 bis 3,
**dadurch gekennzeichnet, daß**
eine regenerative Kühlmittelrückführung von der Zentralkörper-Außenwand über das hintere Zentralkörperende und die an diesem befestigte, die Kühlmittel-Sammelkammer (62) durchsetzende Kolbenstange (26) des Stellmotors (18) zu einer im Tragrohr (8) an die der Sammelkammer gegenüberliegende Seite des Stellmotors angrenzende und durch dessen hydraulische Kolbenabdichtung (30) abgeschlossene Rückführkammer (80) vorgesehen ist.

6. Schubdüse nach Anspruch 5,
**dadurch gekennzeichnet, daß**
die Kolbenstange (26) des Stellmotors (18) thermisch isoliert ist.

7. Schubdüse nach einem der vorhergehenden Ansprüche,
**dadurch gekennzeichnet, daß**
der Zentralkörper-Innenraum (74) mit Druckmittel befüllt ist.

8. Schubdüse nach Anspruch 7,
**dadurch gekennzeichnet, daß**
das Druckmittel Kühlmittel aus der Kühlmittel-Sammelkammer (62) ist.

9. Schubdüse nach einem der vorhergehenden Ansprüche,
**dadurch gekennzeichnet, daß**
der Zentralkörper-Innenraum (74) durch einen Leichtstoffkern (84) ausgesteift ist.

10. Schubdüse nach einem der vorhergehenden Ansprüche,
**dadurch gekennzeichnet, daß**
das Kühlsystem bei abgeschaltetem Triebwerk mit einem Innertgas durchspült ist.

## Claims

1. Thrust nozzle for a jet engine, in particular a hypersonic combination engine, having a central body (12) which is of mushroom-shaped design and is arranged on a supporting tube (8), which is fixed to the engine and is enclosed by the central body (12) at the end, such that it can be displaced axially by means of a hydraulic actuating motor (18), which is accommodated in said supporting tube (8), in order to vary the cross-section of the hot-gas flow channel (16) which is bounded by the thrust nozzle, as well as having a cooling system with, in particular, cooling channels (58, 66), through which fuel flows, for those outer wall sections of the central body (12) and of the supporting tube (8) which are subjected to the hot-gas flow, characterized in that the cooling system contains a coolant collecting chamber (62) which is arranged in a variable-volume manner adjacent to the actuating motor (18) and between the rear central body end and the supporting tube end, is closed on the supporting tube side by the hydraulic seal (32) of the actuating motor and is arranged in the course of the coolant flow between the cooling channels (58) of the supporting tube outer wall and the cooling channels (66) of the central body outer wall, and in that the coolant pressure level in the collecting chamber is less than the hydraulic pressure in the actuating motor and greater than the hot-gas pressure at the end, on the hot-gas channel side, of the sliding joint (10) between the central body (12) and the supporting tube, and the sliding joint is pressurized with coolant from the collecting chamber.

2. Thrust nozzle according to Claim 1, characterized in that coolant flows through the central body outer wall in the constant flow to the hot gas in the hot-gas channel (16).

3. Thrust nozzle according to Claim 1, characterized in that coolant in the opposite flow to the hot gas in the hot-gas channel (16) flows through the central body outer wall.

4. Thrust nozzle according to one of the preceding claims, characterized by the coolant being blown out, via outlet openings (68) which open into the hot-gas flow, after passing through the central body outer wall.

5. Thrust nozzle according to one of Claims 1 to 3, characterized in that a regenerative coolant return is provided from the central body outer wall, via the rear central body end and the piston rod (26), which is attached to said rear central body end and passes through the coolant collecting chamber (62), of the actuating motor (18) to a return chamber (80) which is adjacent, in the supporting tube (8), to that side of the actuating motor which is opposite the collecting chamber and is closed by the hydraulic piston seal (30) of said actuating motor.

6. Thrust nozzle according to Claim 5, characterized in that the piston rod (26) of the actuating motor (18) is thermally insulated.

7. Thrust nozzle according to one of the preceding claims, characterized in that the central body interior (74) is filled with a pressure medium.

8. Thrust nozzle according to Claim 7, characterized in that the pressure medium is coolant from the coolant collecting chamber (62).

9. Thrust nozzle according to one of the preceding claims, characterized in that the central body interior (74) is reinforced by a light material core (84).

10. Thrust nozzle according to one of the preceding claims, characterized in that the cooling system is flushed with an inert gas when the engine is turned off.

## Revendications

1. Tuyère d'éjection des gaz pour un moteur à réaction, en particulier pour un moteur hypersonique combiné fusée-statoréacteur, comportant un corps central (12) en forme de champignon qui, aux fins de faire varier la section du canal (16) d'écoulement des gaz chauds délimité par la tuyère, est disposé sur un tube support (8) solidaire du moteur à réaction, en entourant l'extrémité du tube support, avec possibilité de déplacement dans la direction axiale au moyen d'un actionneur (18) hydraulique logé à l'intérieur dudit tube support, ainsi qu'un circuit de refroidissement avec des canaux de refroidissement (58, 66), parcourus notamment par le combustible, pour les parties de parois extérieures du corps (12) central et du tube support (8) exposées au flux de gaz chaud, caractérisé par le fait que le circuit de refroidissement comprend une chambre (62) collectrice d'agent de refroidissement de volume variable qui est disposée entre l'extrémité postérieure du corps central et l'extrémité du tube support, au voisinage de l'actionneur (18) et est délimitée côté tube support par le système d'étanchéité hydraulique (32) de l'actionneur, laquelle chambre est disposée sur le trajet de l'agent de refroidissement entre les canaux (58) de refroidissement de la paroi extérieure du tube support et les canaux de refroidissement (66) de la paroi extérieure du corps central et par le fait que la pression de l'agent de refroidissement dans la chambre collectrice est inférieure à la pression hydraulique dans l'actionneur et supérieure à la pression des gaz chauds à l'extrémité côté canal d'écoulement des gaz chauds de l'assemblage coulissant (10) entre le corps central (12) et le tube support (8) et que l'assemblage coulissant est sollicité en pression par l'agent de refroidissement provenant de la chambre collectrice.

2. Tuyère d'éjection des gaz selon la revendication 1, caractérisée par le fait que la paroi extérieure du corps central est parcourue par l'agent de refroidissement qui circule dans le même sens que les gaz chauds dans le canal d'écoulement (16) des gaz chauds.

3. Tuyère d'éjection des gaz selon la revendication 1, caractérisée par le fait que la paroi extérieure du corps central est balayée par l'agent de refroidissement qui circule à contre-courant des gaz chauds dans le canal d'écoulement (16) des gaz chauds.

4. Tuyère d'éjection des gaz selon l'une des revendications précédentes, caractérisée par l'éjection de l'agent de refroidissement, après son passage dans la paroi extérieure du corps central, par l'intermédiaire d'orifices de sortie qui débouchent dans le flux de gaz chauds.

5. Tuyère d'éjection des gaz selon l'une des revendications 1 à 3, caractérisée par le fait qu'il est prévu un recyclage régénérateur de l'agent de refroidissement de la paroi extérieure du corps central par l'intermédiaire de l'extrémité postérieure du corps central et de la tige de piston (26) de l'actionneur (18) qui traverse la chambre (62) collectrice d'agent de refroidissement vers une chambre de recyclage (80) qui est disposée dans le tube support (8) du côté de l'actionneur opposé à la chambre collectrice et qui est fermée par le système (30) d'étanchéité hydraulique du piston.

6. Tuyère d'éjection des gaz selon la revendication 5, caractérisée par le fait que la tige de piston (26) de l'actionneur (18) est isolée thermiquement.

7. Tuyère d'éjection des gaz selon l'une des revendications précédentes, caractérisée par le fait que la chambre intérieure (74) du corps central est remplie de fluide sous pression.

8. Tuyère d'éjection des gaz selon la revendication 7, caractérisée par le fait que le fluide sous pression est du fluide de refroidissement provenant de la chambre (62) collectrice de fluide de refroidissement.

9. Tuyère d'éjection des gaz selon l'une des revendications précédentes, caractérisée par le fait que la chambre intérieure (74) du corps central est rigidifiée par un noyau (84) en matériau léger.

10. Tuyère d'éjection des gaz selon l'une des revendications précédentes, caractérisée par le fait que, lorsque le moteur à réaction est à l'arrêt, le circuit de refroidissement est parcouru par un gaz inerte.
